# EUROPEAN PATENT APPLICATION

(11) **EP 1 248 407 A1**
(43) Date of publication of application: **09.10.2002**
(21) Application number: 00979081.7
(22) Date of filing: 04.12.2000
(51) Int. Cl.: H04L 1/22, H04Q 9/00, G08C 25/00, H04B 7/26

(54) **COMMUNICATION CONTROLLER AND CONTROL METHOD THEREFOR**

(71) Applicant: MITSUBISHI DENKI KABUSHIKI KAISHA, Tokyo 100-8310 (JP)
(72) Inventor: MATSUMOTO, Soichiro, Tokyo 100-8310 (JP)
(74) Representative: Bohnenberger, Johannes, Dr.
(86) International application number: JP0008581
(87) International publication number: WO02047318

(57) **Abstract**

In a wireless base station apparatus 1, when an active-mode control unit 29 stores the measured data informed from a TRX 25, a BB 26, and a wire transmission line interface unit 28 at every fixed interval of time in a shared memory 31, it stores the measuring time, and if there is a fear of data loss, the existence of data loss is determined by referring to the stored measuring time, and if a data loss occurs, the lost measured data is complemented.

## Description

### Technical Field

This invention is related to a communication control unit and a control method therefore, and particularly to a communication control unit for use with a wireless base station apparatus, and a control method therefor.

### Background Art

As an apparatus having a communication control unit, there has been provided a wireless base station apparatus. The wireless base station apparatus performs communication between mobile terminals existing in a cell, which is in a communication availability range, to transmit receiving information to an exchange connected through a base station control unit, and sends transmitting information sent from the exchange to the corresponding mobile terminal. If a plurality of mobile terminals are existing in the cell, it performs communication between those mobile terminals by multiple access. Accordingly, in the wireless base station apparatus, there are provided a receiving amplifier, a transmitting amplifier, a wireless unit, and a baseband signal processing unit, as well as a control unit as a communication control unit for controlling the wireless base station apparatus.

Specifically, the role of the control unit is important, and various countermeasures are taken for malfunctions. For instance, two systems of the same control unit are provided, wherein one system is intended for an active mode, whereas the other system is intended for a standby mode, and if a malfunction occurs in the control unit in the active mode, the control unit in the standby mode is switched to the active mode to take over the operation of the faulty control unit, whereby communication can be continued without hindrance.

Further, the control unit for the active mode receives and stores various data measured at the information processing unit in a memory to implement smooth communication. For instance, if the condition of the radio wave from a mobile terminal in the peripheral region of a cell is bad and the receiving level is low, the transmitting power for the mobile terminal is increased, and the mobile terminal is instructed to increase its transmitting power. For the case of such power control, measured data on the number of CRC-NG (detection of the number of errors) is periodically received and stored in the memory.

However, there was a problem that, when the control unit for the active mode malfunctioned and was switched to the control unit for the standby mode, the measured data sent from the information unit could not be received and a data loss occurred. In addition, since the control unit switched from the standby mode to the active mode cannot recognize the data loss, the measured data firstly received after the switching is stored next to the measured data lastly stored by the faulty unit, so that there was a problem that an error occurred if a power control and other controls were performed using the group of measured data stored in the memory.

This invention has been made to solve the above problem, and it aims to obtain a communication control unit which can recognize the loss of the measured data notified to a control unit and take a countermeasure against the data loss, and a control method therefor.

### Disclosure of the Invention

The communication control unit related to this invention can be switched to an active mode in which the data communication with an external device is performed, or to a standby mode in which the data communication with an external device is not performed, wherein the communication control unit comprises: a data receiving means for receiving measured data on communication control which is notified at every fixed interval of time in the active mode, a data storing means for storing the measured data received by the data receiving means in a predetermined data memory means, a data loss determination means for determining as to whether or not there is lost measured data between the measured data stored in the data memory means just before switching from the standby mode to the active mode and the measured data received just after the switching, and a data loss compensating means for making compensation for the data loss if a loss of measured data is detected by the data loss determination means.

This produces such an effect that the loss of communicated measured data can be recognized, and a countermeasure against the data loss can be taken.

In the communication control unit related to this invention, the data storing means is adapted to store the time when the data receiving means receives data in the memory means as a measuring time along with the measured data.

This produces such an effect that whether or not there is a loss of measured data can easily be determined based on the stored measuring time.

In the communication control unit related to this invention, the data loss compensating means is adapted to complement lost measured data by the measured data stored in the data memory means just before the switching, and the measured data received just after the switching.

This produces such an effect that communication control such as power control can be carried out without hindrance even if a data loss occurs.

In the communication control unit related to this invention, the data loss compensating means is adapted to complement lost measured data by averaging the measured data stored in the data memory means just before the switching and the measured data received just after the switching.

This produces such an effect that lost measured data can easily be complemented.

The communication control unit related to this invention is adapted to perform the call processing control within a wireless base station apparatus by using a measured data group stored in the data memory means.

This produces such an effect that the call processing control can be carried out without hindrance in the event of a loss of measured data.

The communication control unit related to this invention is adapted to perform the maintenance management within a wireless base station apparatus by using a measured data group stored in the data memory means.

This produces such an effect that the maintenance management control can be carried out without hindrance in the event a loss of measured data.

The control method for controlling a communication control unit, which unit can be switched to an active mode in which data communication with an external device is performed, or to a standby mode in which data communication with an external device is not performed, is constructed such that it comprises: a step of receiving the measured data regarding communication control which is notified at every fixed interval of time in the active mode, a step of storing the measured data received in the receiving step in a predetermined data memory means, a step of determining as to whether or not there is lost measured data between the measured data stored in the data memory means just before the switching from the standby mode to the active mode and the measured data received just after the switching, and a step of performing data loss compensation if a loss of measured data is detected in the determination step.

This produces such an effect that the loss of notifiedmeasured data can be recognized, and a countermeasure against the data loss can be taken.

In the control method related to this invention, the step of storing data is adapted to store the time when the data is received in the step of receiving data as a measuring time along with the measured data.

This produces such an effect that whether or not there is a loss of measured data can easily be determined based on the stored measuring time.

In the control method related to this invention, the step of performing data loss compensation is adapted to complement lost measured data by the measured data stored in the data memory means just before the switching, and the measured data received just after the switching.

This produces such an effect that communication control such as power control can be carried out without hindrance even if a data loss occurs.

In the control method related to this invention, the step of performing data compensation is adapted to complement lost measured data by averaging the measured data stored in the data storing means just before the switching, and the measured data received just after the switching.

This produces such an effect that lost measured data can easily be complemented.

In the control method related to this invention, the call processing control unit within a wireless base station apparatus is carried out by using the measured data group stored in the data memory means.

This produces such an effect that the call processing control can be carried out without hindrance in the event of a loss of measured data.

In the control method related to this invention, the maintenance management within a wireless base station apparatus is carried out by using the measured data group stored in the data memory means.

This produces such an effect that the maintenance management control can be carried out without hindrance in the event a loss of measured data.

### Brief Description of the Drawings

Fig. 1 is a block diagram of a W-CDMA system using a wireless base station apparatus having a communication control unit according to a first embodiment for carrying out this invention;
Fig. 2 is a block diagram showing the construction of a wireless base station apparatus having the communication control unit according to the first embodiment for carrying out this invention;
Fig. 3 is a block diagram showing the construction of the communication control unit according to the first embodiment for carrying out this invention;
Fig. 4 is a diagram showing the storing area in the shared memory of the communication control unit according to the first embodiment for carrying out this invention;
Fig. 5 is diagram showing the progression of reception of measured data in the communication control unit according to the first embodiment for carrying out this invention;
Fig. 6 is a flowchart showing a control method for controlling the communication control unit according to the first embodiment for carrying out this invention; and
Fig. 7 is a flowchart showing a control method for the communication control unit according to a second embodiment for carrying out this invention.

### Best Mode for Carrying Out the Invention

Now, to describe this invention in more detail, the best mode for carrying out this invention is described with reference to the accompanying drawings.

### (First Embodiment)

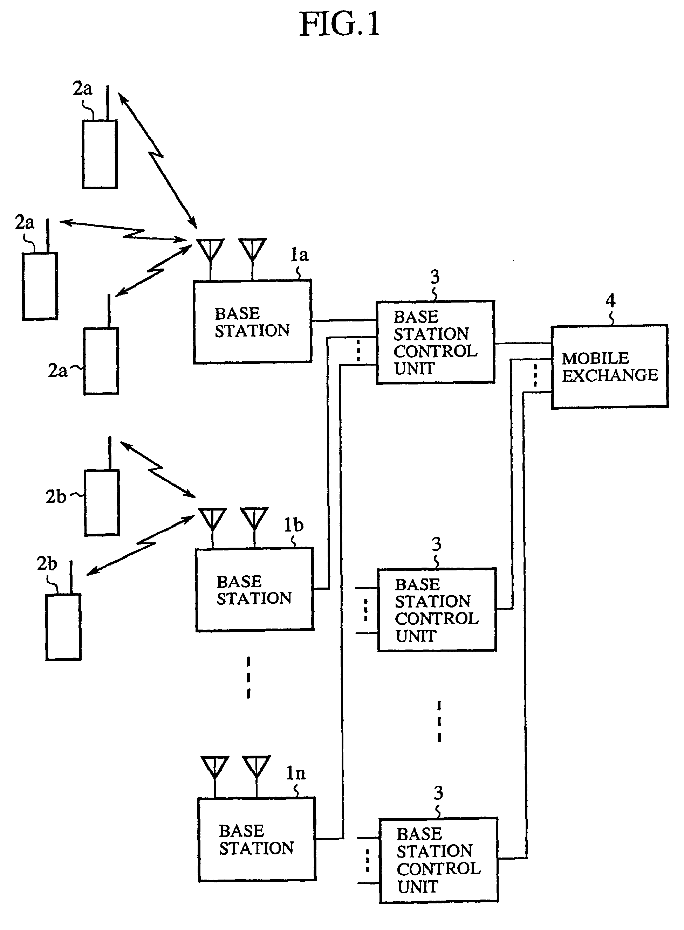

Fig. 1 is a block diagram of a W-CDMA (broad-band code division multiple access) system using a wireless base station apparatus (hereinafter referred to just as "base station") having the communication control unit according to the first embodiment for carrying out this invention, and in the figure 1, 1 (1a, 1b... 1n) is a plurality of base stations, 2 (2a, 2b) is a mobile terminal each communicating with the base station 1, 3 is a base station control unit each connected to the plurality of base stations, and 4 is a mobile exchange accommodating a plurality of base station control units 3 and connected to a communication network.

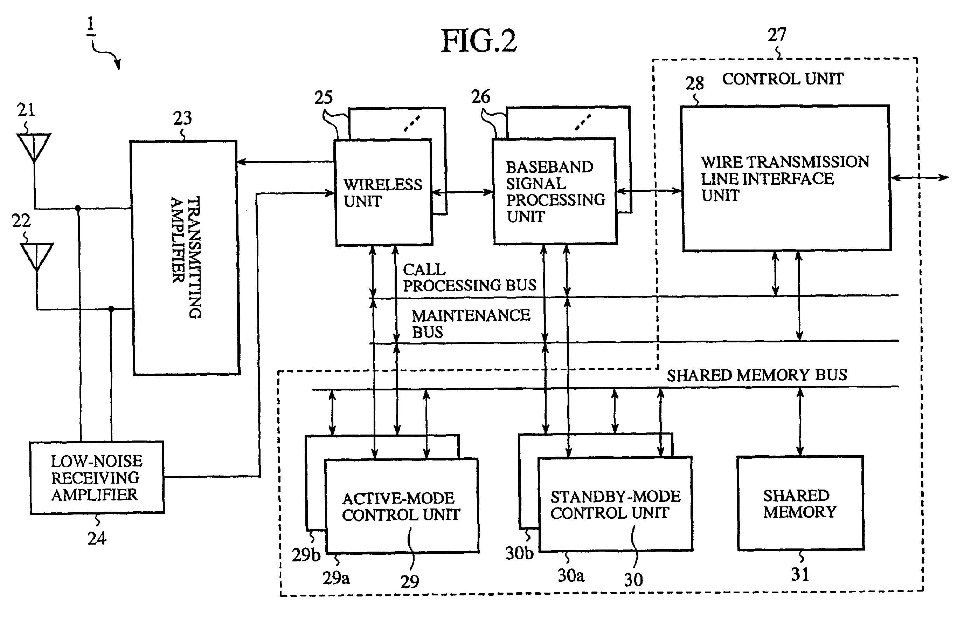

Fig. 2 is a block diagram showing the internal construction of a base station, and in the figure, 21 and 22 are antennas, 23 is a transmitting amplifier (AMP), 24 is a low-noise receiving amplifier (LNA), 25 is a wireless unit (TRX) for performing transmission and reception, 26 is a baseband signal processing unit (BB), 27 is a control unit, 28 is a wire transmission line interface unit in the control unit 27, 29 (29a, 29b) is an active-mode control unit in the control unit 27, 30 (30a, 30b) is a standby mode control unit in the control unit 27, and 31 is a shared memory (data memory means) in the control unit 27.

In Fig. 2, the active-mode control unit 29 and the standby-mode control unit 30, comprising each a processing control unit (respectively 29a and 30a) and a maintenance management control unit (respectively 29b and 30b), are connected to an information unit made up of the wireless unit 25, the baseband signal processing unit 26, and the wire transmission line interface unit 28 by a call processing bus and a maintenance bus. Further, the active-mode control unit 29 and the standby-mode control unit 30 are connected to a shared memory 31 by a shared memory bus, respectively.

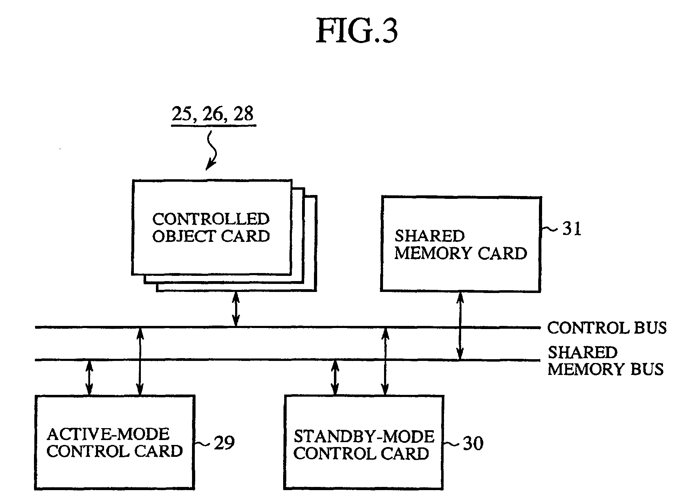

Further, each of the wireless unit 25, the baseband signal processing unit 26, and of the wire transmission line interface unit 28 has a plural construction, and can accommodate a plurality of mobile terminals. And, to perform a power control and other controls of the radio wave for a mobile terminal as a target to be controlled, a control target card (board) is mounted in the base station. Further, to provide for replacement in the event of failure or to increase the memory capacity, the active-mode control unit 29, the standby-mode control unit 30, and the shared memory 31 also have a card structure. Fig. 3 shows the card construction.

Although not shown in Fig. 3, the active-mode control card 29 and the standby-mode control card 30 respectively consist of a call processing card for controlling a call processing, and a maintenance management control card for managing a control target card, as described above. The call processing control card (29a, 30a in Fig. 2) performs the processing control related to a call. The information on a call includes communication speed which is resource information for the baseband signal processing unit 26, cell information which is resource information for the wireless unit 25, and line information which is resource information for the wire transmission line interface unit 28.

The maintenance management control card (29b, 30b in Fig. 2) monitors the state of the control target card. The card state includes a current or normal operation state (active), a preliminary or normal standby state (standby), an alarm state, an error state, a block state, and a reset state.

In the normal operation state, the inputting, internal processing, and outputting of a signal are allowed. In the normal standby state, the inputting and internal processing of a signal are allowed, but the outputting of it is inhibited. The alarm state and the error state are states in which the normal operation cannot be performed. The block state is a state used for a card replacement operation. The reset state is a state similar to power activation, and has no effect on the bus.

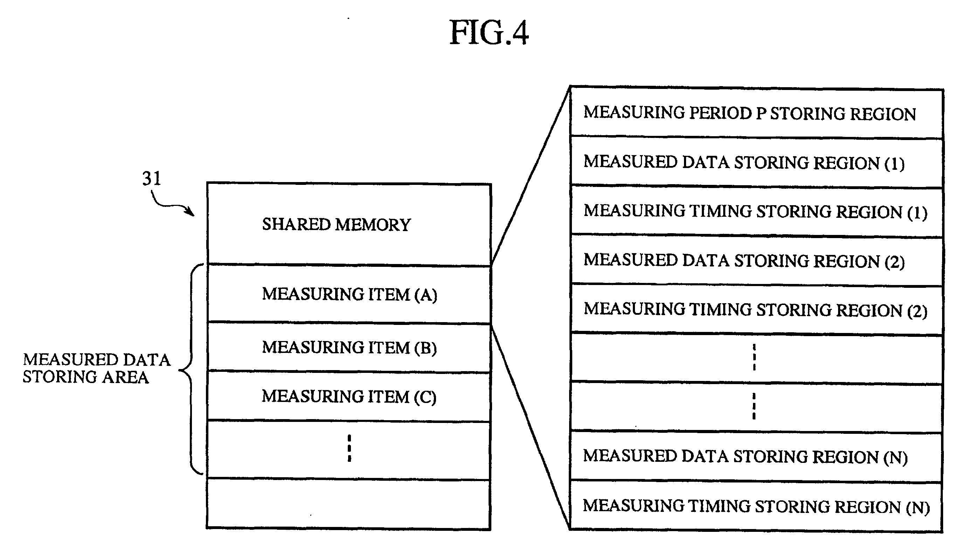

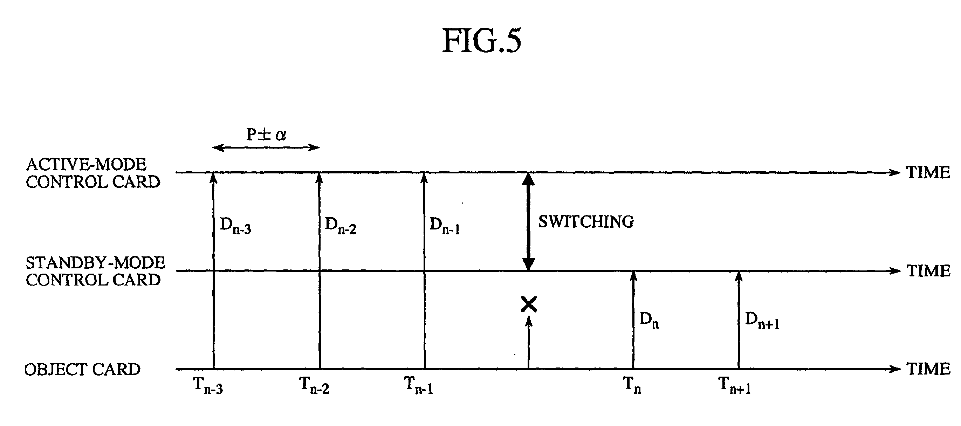

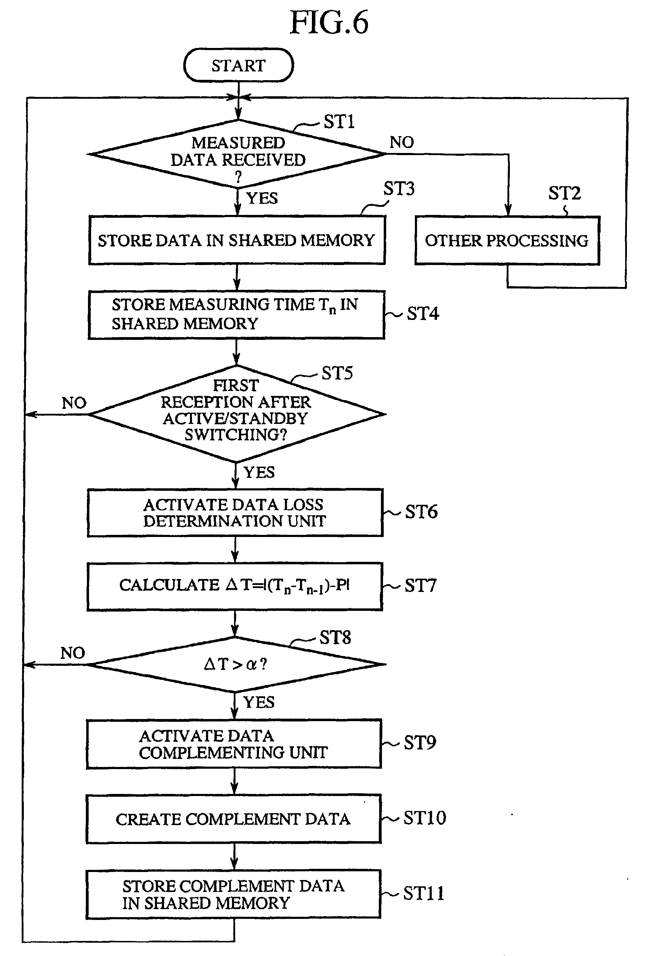

Fig. 4 is a block diagram of the shared memory 31. Fig. 5 is a diagram showing the timing of notifying measured data sent from the control target card to the active-mode control card. Further, Fig. 6 is a flowchart showing the operation performed in the control method for the base station.

The operation is now described.

The information unit comprising the wireless unit 25, the baseband signal processing unit 26 and the wire transmission line interface unit 28 measures the status of the communication with a mobile terminal 2 and notifies the thus measured data to the active-mode control unit 29 at a fixed time interval. That is, referring to Fig. 3, a plurality of control target cards notify measured data to the active-mode card through a control bus at a preset fixed time interval, respectively.

Measured data includes measured data regarding the channel state from the baseband signal processing unit 26, measured data regarding the cell discard rate from the wire transmission line interface unit 28, measured data of the total transmitting power from the wireless unit 25, and the like. For instance, in the measurement of the channel state, the receiving field level ratio (receiving Eb/IO) of the adjacent cell, the number of CRC-NG, which is the number of detected errors, and the like are measured.

As a result of the periodical measurement of the receiving field level ratio of the adjacent cell, if the field level ratio of the adjacent cell exceeds the field level ratio of the local cell, hand-over is initiated. Further, as a result of the periodical measurement of the number of CRC-NG, if it exceeds a prescribed upper value, it is determined that the radio wave condition is bad, and control is exercised to increase the standard for transmitting power. Conversely, if the measurement result does not exceed a prescribed lower limit value, it is determined that the radio wave is excessively good, and control is exercised to lower the standard for transmitting power.

The measurement period or the measured data notification timing is preset for each measurement item, and as shown in Fig. 4, the measurement period P in the particular measurement item is set in the corresponding item region in the measured data storing area within the shared memory 31. Accordingly, the control target card corresponding to the measurement item in Fig. 3 notifies the measured data on the item to the active-mode control card 29 for each measurement period P. Actually, there is an error in time, and if the maximum error time width is assumed to be α, the measurement period is P±α as shown in Fig. 5.

Fig. 6 is a flowchart showing the control method for the active-mode control card 29 or the standby-mode control card 30 (strictly speaking, the control card 30 after switching from the standby mode to the active mode). In the control program (or hardware) in these control cards, there is built a software module or a hardware module comprising a measured data receiving unit (step or data receiving means), a measured data storing unit (step or data storing means), measured data loss determination (step or data loss determination means), and measured data complementing (step or data complementing means).

In the flowchart of Fig. 6, the active-mode control card determines whether or not measured data is received (step ST1) by the activation of the measured data receiving unit, and if data is not received, it performs another processing (step ST2) and waits for data reception. On the other hand, if data is received, it activates the measured data storing unit to store the data in the shared memory (step ST3). Further, it stores the time of the data reception as a measuring time in the shared memory (step ST4).

For instance, in Fig. 5, if measured data Dₙ₋₃ is received at the time Tₙ₋₃, the measured data Dₙ₋₃ is stored in the corresponding measured data storing region in Fig. 4, and the measuring time Tₙ₋₃ is stored in the measurement timing storing region.

Then, if the active-mode control card operating in this flowchart malfunctions, and the standby-mode control card is switched to the active-mode control card and the operation of this flowchart is started, it is determined whether or not the received data is the first reception after the switching (step ST5). If it is not the first reception, there is no data loss, and the flow goes to step ST1 to wait for the next data reception.

If the received data is the first reception after the switching, it may be considered that the switching timing and the data receiving timing are overlapping. In such case, the control card cannot receive the notified measured data. Accordingly, the data loss determination unit is activated (step ST6) to perform a calculation in which the measuring time Tₙ₋₁ for the previous measured data Dₙ₋₁ in the shared memory is subtracted from the measuring time Tₙ for the first measured data (assumed to beDₙ) after the switching, then the measurement period P is further subtracted from the resultant value of the above subtraction, and the absolute value of the resultant value is made ΔT (step ST7). And, it is determined whether or not Δ Tis larger than the maximum error time width α (step ST8).

If ΔT is not larger than α, the interval between the measuring time
Tₙ₋₁ before the active/standby switching and the measuring time Tₙ after the active/standby switching substantially matches the measurement period. Accordingly, the active/standby switching timing and the receiving timing for measured data do not overlap each other, so there is no data loss. In this case, the flow goes to step ST1 to wait for the next data reception.

On the other hand, if ΔT is larger than α, the interval between the measuring time Tₙ₋₁ before the active-standby switching and the measuring time Tₙ after the active/standby switching is considerably large. In this case, as shown in Fig. 5, the active/standby switching timing and the reception timing of measured data overlap each other, causing a data loss.

Accordingly, in this case, the data complementing unit is activated (step ST9) to create complement data (step ST10). For instance, complement data is created by averaging the measured data before the switching and the measured data after the switching. And, the thus created complement data is stored in the shard memory (step ST11). Thereafter, the flow goes to step ST1 to wait for the next data reception.

As obvious from the foregoing, in accordance with the communication control unit and the control method therefor in the first embodiment, when measured data notified from the control target card at a fixed time interval in a base station is stored in the shared memory, the measuring time is stored, and if there is a fear of data loss, the stored measuring time is referenced to determine the existence of data loss. Thereafter, in the event of occurrence of a data loss, the lost measured data is complemented. Accordingly, an effect of enabling recognition of the loss of measured data notified to the control unit is obtained, and an effect of enabling a countermeasure against the data loss to be taken is also obtained.

Further, in this case, since the time of reception is stored in the shared memory along with measured data as a measuring time, such an effect is obtained that the existence of a measured data loss can easily be determined based on the stored measuring time.

Further, in this case, since lost measured data is complemented by the measured data stored in the shared memory just before the switching and the measured data received just after the switching, such an effect is obtained that communication control such as power control can be exercised without hindrance in the event of occurrence of a data loss.

Further, in this case, since lost measured data is complemented by averaging the measured data stored in the shared memory just before the switching and the measured data received just after the switching, such an effect is obtained that the lost measured data can easily be complemented.

Further, if the control card is the call processing control card, the call control within the wireless base station apparatus is carried out by using the measured data group stored in the shared memory, so that such an effect is obtained that the call processing control can be performed without hindrance in the event of occurrence of a measured data loss.

Further, if the control card is the maintenance management control card, the maintenance management within the wireless base station apparatus is performed by using the measured data group stored in the shared memory, so that such an effect is obtained that the maintenance management control can be performed without hindrance in the event of occurrence of a measured data loss.

### (Second Embodiment).

Although the first embodiment has been explained as to the case in which a lost measured data is complemented, some necessary complementing process may be performed when exercising the power control or the like, using the measured data group accumulated in the shared memory.

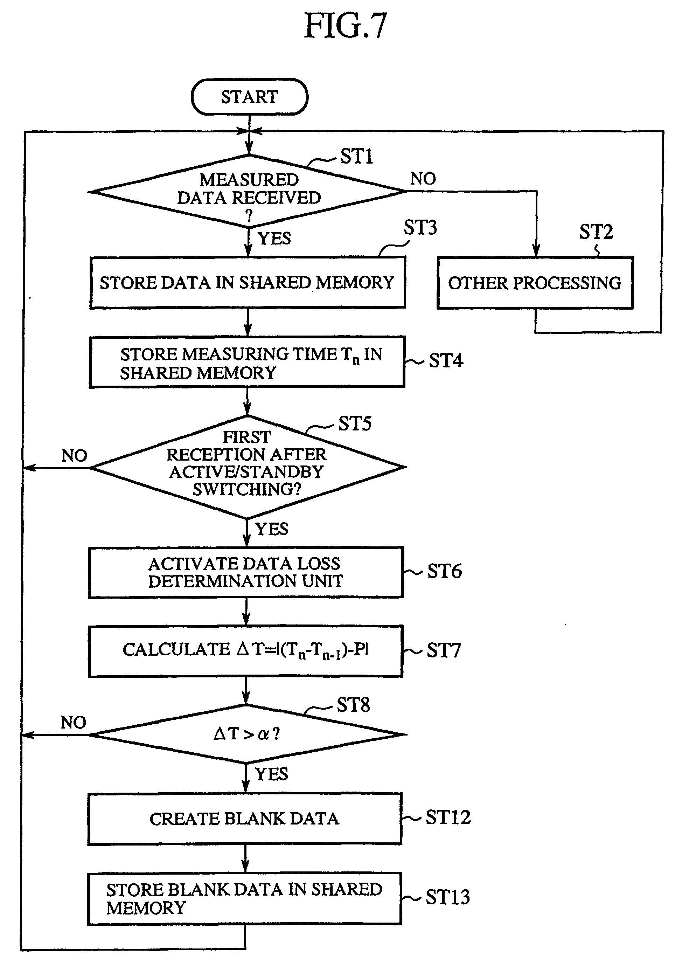

Fig. 7 is a flowchart showing the control method in a second embodiment. In this flowchart, steps ST1 to ST8 are the same as those of the first embodiment, except that in step ST8, ifΔ Tis larger than α, that is, if a data loss occurs, blank data is created (step ST9). For instance, a value that cannot exist as measured data is created. And, the blank data is stored in the shared memory (step ST10). Thereafter, the flow goes to step ST1 to wait for the next data reception.

And, when performing the power control or the like, the data complementing unit is activated if data complementing is necessary. If data complementing is not necessary depending on the type of measured data or the communication condition, the activation of the data complementing unit is not performed. In either case, data loss can be recognized by the existence of the blank data.

Also in this second embodiment, when measured data notified from the control target card at every fixed time interval in the base station is stored in the shared memory, the measuring time is stored, and if there is a fear of data loss, the existence of a data loss is determined by referencing the stored measuring time. And, if a data loss occurs, the fact of the occurrence of a loss is shown by blank data. Accordingly, the measured data loss notified to the control unit can be recognized, and a countermeasure against the data loss can be taken.

In the above first and second embodiments, although a construction is employed in which a data loss is determined when the active-mode control card malfunctions and the standby-mode control card is switched to the active-mode control card, data losses may be caused due to other sources. Thus, a construction may be provided in which the existence of a data loss is determined each time measured data is received.

### Industrial Applicability

As described above, in the wireless base station apparatus and the control method therefor according to the present invention, when measured data notified at every fixed interval of time is stored in a memory, the measuring time is stored, and if there is a fear that data is lost, the existence of data loss is determined by referring to the stored measuring time, and if a data loss occurs, a countermeasure against the data loss is taken, so that they are suitable for a system which exercises communication control such as power control by using the measured data group accumulated in the memory.

## Claims

1. The communication control unit which can be switched to an active mode in which the data communication with an external device is performed, or to a standby mode in which the data communication with an external device is not performed, said communication control unit comprising:
a data receiving means for receiving measured data regarding communication control which is notified at every fixed interval of time in said active mode;
a data storing means for storing said measured data received by the data receiving means in a predetermined data memory means;
a data loss determination means for determining as to whether or not there is lost measured data between the measured data stored in said data memory means just before switching from said standby mode to said active mode and the measured data received just after the switching; and
a data loss compensating means for making data loss compensation for the data loss if a loss of measured data is detected by the data loss determination means.

2. The communication control unit according to claim 1, wherein the data storing means stores the time when the data receiving means has received data in said data memory as a measuring time along with the measured data.

3. The communication control unit according to claim 1, wherein the data loss compensating means complements lost measured data by the measured data stored in the data memory means just before the switching, and the measured data received just after the switching.

4. The communication control unit according to claim 3, wherein the data loss compensating means complements lost measured data by averaging the measured data stored in the data memory means just before the switching and the measured data received just after the switching.

5. The communication control unit according to claim 1, wherein the call processing control within a wireless base station apparatus is performed by using the measured data group stored in the data memory means.

6. The communication control unit according to claim 1, wherein the maintenance management within a wireless base station apparatus is performed by using the measured data stored in the data memory means.

7. A control method for controlling a communication control unit,
wherein said control unit can be switched to an active mode in which the data communication with an external device is performed, or to a standby mode in which the data communication with an external device is not performed, said control method comprising:
a step of receiving measured data regarding communication control which is notified at every fixed interval of time in said active mode;
a step of storing said measured data received in the receiving step in a predetermined data memory means;
a step of determining as to whether or not there is lost measured data between the measured data stored in said data memory means just before switching from the standby mode to the active mode and the measured data received just after the switching; and
a step of performing compensation for the data loss if a loss of measured data is detected in the determination step.

8. The control method for a communication control unit according to claim 7, wherein the step of storing data stores the time when data is received in the step of receiving data in the data memory means as measuring data along with the measured data.

9. The control method for a communication control unit according to claim 1, wherein the step of performing data loss compensation complements lost measured data by the measured data stored in the data memory means just before the switching, and the measured data received just after the switching.

10. The control method for a communication control unit according to claim 9, wherein the step of performing data loss compensation complements lost measured data by averaging the measured data stored in the data memory means just before the switching and the measured data received just after the switching.

11. The control method for a communication control unit according to claim 7, wherein the call processing control within a wireless base station apparatus is performed by using the measured data group stored in the data memory means.

12. The control method for a communication control unit according to claim 7, wherein the maintenance management within a wireless base station apparatus is performed by using the measured data group stored in the data memory means.
